# EUROPEAN PATENT APPLICATION

(11) **EP 3 023 668 A1**
(43) Date of publication of application: **25.05.2016**
(21) Application number: 15188245.3
(22) Date of filing: 02.10.2015
(51) Int. Cl.: F16F 1/32

(54) **BONDED HELICAL COMPRESSION SPRING**

(30) Priority: 03.10.2014 US 201462059442 P; 30.09.2015 US 201514870510
(71) Applicant: Tyco Electronics Corporation, Berwyn, PA 19312 (US)
(72) Inventor: Russell, Kent D., Harrisburg, PA Pennsylvania 17110 (US); Fry, Charles David, New Bloomfield, PA Pennsylvania 17068 (US)
(74) Representative: Bankes, Stephen Charles Digby

(57) **Abstract**

A bonded helical compression spring (10). The spring includes a plurality of layers (12) having successive wave crests (14) and troughs (16). First crests and first troughs of a first layer are aligned with respective second troughs and second crests of an adjacent second layer and with respective third troughs and third crests of an adjacent third layer. The first crests of the first layer are bonded to the second troughs of the adjacent second layer and the first troughs of the first layer are bonded to the third crests of the adjacent third layer. As the crests and troughs of adjacent layers are bonded together, friction between the crests and troughs is eliminated.

## Description

The present invention is directed to a compression spring which has increased stiffness. In particular, the invention is directed to a bonded helical compression spring which can be printed or molded in plastic.

Springs are used extensively in many industries for their dynamic and mechanical properties. For example, large scale springs are used in the automotive industry, or smaller scale springs are used for smaller electronic and/or mechanical devices. Steel springs have been often used in light of their quality of fabrication, stiffness, strength and their ability to be mass produced. However, steel springs tend to be relatively heavy and disadvantageous to use in certain applications given their weight. For example, in applications such as automobiles, airplanes and railway cars, it is critical to reduce the weight of various components to reduce the overall weight of the apparatus. Other drawbacks of steel springs are that they have limited corrosion resistance, fatigue strength, have a high coefficient of thermal expansion, have magnetic properties and are electrically conductive. In addition, the vibratory capacity and endurance of the metal springs limit the length of time and frequency during which these machines can be operated without replacement of the metal springs due to fatigue failure.

One approach to some of the drawbacks of steel springs is to form single helical springs from composite materials. Single helical springs formed of composite materials have been developed to take advantage of light weight characteristics of plastic materials. However, these types of springs fail to provide sufficient stiffness to replace steel springs. A single helical spring is a torsion bar wrapped into a helical form, and the stiffness of a torsion bar is determined by the shear modulus of elasticity of the material. As the shear modulus of composite materials is much smaller than the shear modulus of steel, the stiffness of a single helical composite spring is much less than that of a steel single helical spring.

Metal multi-wave compression spring are also known. Wave springs by their very nature are prone to fatigue failure. The springs are flexed repeatedly and the cross-section of each turn of the spring is generally thin, and the spring is stressed very often to the highest possible limit. Wave springs are normally made of hardened and tempered metal in which the metal is deformed plastically to create the waves. This deformation induces residual compressive and tensile stresses in different surfaces of the wave. After loading, the residual stresses increase the effective applied stresses on the spring. Apart from the fatigue life characteristics of the spring, the load resulting from the combined residual and applied stresses may exceed the yield strength of the material and result in catastrophic failure of the spring.

Another problem associated with metal wave compression springs is the method typically used to form the spring. In order to produce multi-wave compression springs, a metal filament is typically edge wound into the circular configuration of the spring. As a result of the material twist resulting from edge winding, the contact area between the crests and troughs on adjacent layers of the multi-wave spring is not between parallel surfaces but rather the layers meet at a point. More particularly, the steel or metal multi-wave compression springs being edge wound are not uniformly planar in a radial direction outward from a longitudinal axis of the spring. As a result, only the outer edges of each crest and trough contact at a point. The point loading at each adjacent crest and trough establishes a large point loading contact stress which wears on the outer edge of the spring. The point contact results in rubbing between the adjacent crests and troughs during repeated and successive loading of the spring. The friction created at the point contact between each crest and trough results in galling on the surface of the spring filament. The point rubbing or galling reduces the fatigue life and creates a sharp edge. The sharp edge adds a large stress concentration factor further deteriorating the contact area and ultimately creating a crack initiation site in the spring which potentially leads to catastrophic failure.

Another problem associated with metallic multi-wave compression springs is the non-linearity of the spring response. The effects of the point contact between the adjacent crests and troughs of the metal spring in combination with the production methods typically used for such springs results in a linear spring rate over a very narrow deflection range or a non-linear spring response over a larger deflection range. A 'linear' spring response, spring constant or spring rate as referred to herein means that a constant incremental applied force results in a constant incremental deflection of the spring.

A further problem associated with metal multi-wave springs is hysteresis. Hysteresis is the difference in a plot of the force/deflection of a spring as it is loaded compared to when the load is being removed. The difference between the force/deflection plots of the loading and unloading of a metal multi-wave spring is significant. A large hysteresis results in inconsistent spring performance, especially at high frequency loading and unloading conditions.

It has long been known to use composites materials as a substitute for metallic leaf springs and metallic coil springs. The use of composite materials provides a low weight substitute for metal springs. However, the benefits of composite materials have not been fully realized for use in multi-wave compression springs due in part to the characteristics of the waves and the forming requirements associated with the waves. Forming the waves into the layers of a cured composite ribbon or coil spring is impractical and would result in the cracking, breaking or destruction of the fibers and/or resin matrix of the composite material. Moreover, even if the cured composite ribbon could be edge wound as is done with metal ribbons, the crests and troughs would still be canted resulting in point contact and all of the disadvantages associated therewith.

Furthermore, by their very nature multi-wave springs have a significant amount of contact and/or rubbing at the wave crest and trough interfaces. Multi-wave springs should be capable of being used in a wide variety of environments and conditions, including industrial and automotive applications which can be very non-sterile, dirty and have many particulate contaminants. These dirt particles and other contaminants could interfere with the wave crest and trough interfaces and cut, degrade or otherwise damage the composite materials, particularly the fibers.

Accordingly, what is needed is a lightweight compression spring capable of providing sufficient stiffness for a wide variety of applications. What is further needed is a spring which has an improved resistance to fatigue and corrosion.

The solution is provided by a bonded helical compression spring as disclosed herein. The spring includes a plurality of layers having successive wave crests and troughs. First crests and first troughs of a first layer are aligned with respective second troughs and second crests of an adjacent second layer and with respective third troughs and third crests of an adjacent third layer. The first crests of the first layer are bonded to the second troughs of the adjacent second layer and the first troughs of the first layer are bonded to the third crests of the adjacent third layer. As the crests and troughs of adjacent layers are bonded together, friction between the crests and troughs is eliminated.

The invention will now be described by way of example with reference to the accompanying drawings in which:
FIG. 1 is a perspective view of an illustrative embodiment of a bonded helical compression spring according to the present invention.
FIG. 2 is a front view of the bonded helical compression spring of FIG. 1.
FIG. 3 is a cross-sectional view of the bonded helical compression spring taken along line 3-3 of FIG. 1.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the preferred embodiments. Accordingly, the invention expressly should not be limited to such preferred embodiments illustrating some possible non-limiting combination of features that may exist alone or in other combinations of features, the scope of the invention being defined by the claims appended hereto.

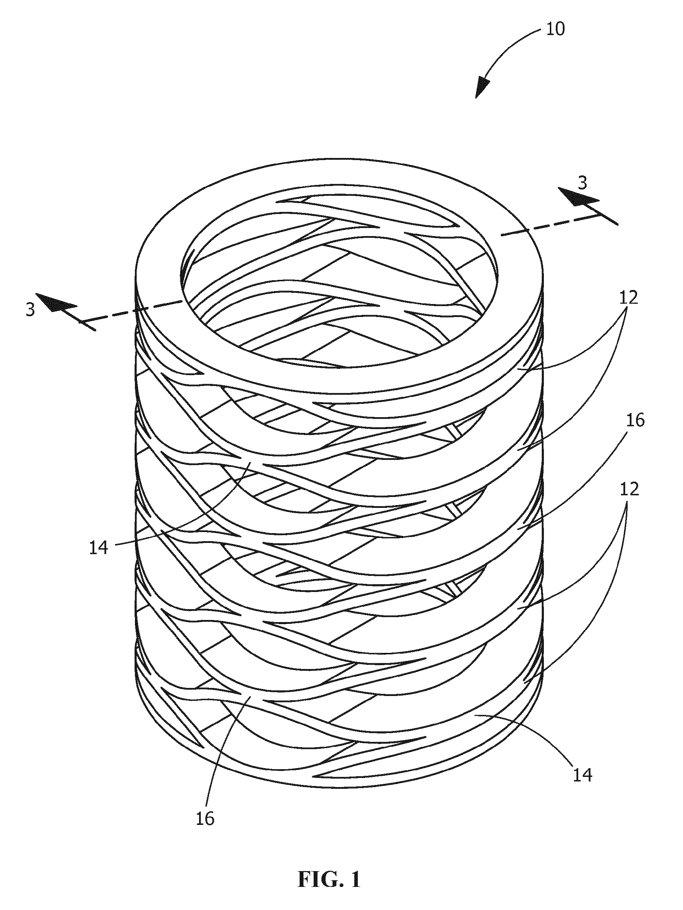

A bonded helical compression spring 10 according to one embodiment of the present invention is shown in FIG. 1. Each layer 12 of the compression spring extends generally 360° around the spring 10 and includes successive wave crests 14 and troughs 16 which follow a substantially sinusoidal wave path. The number of crests 14 and troughs 16 is equal for each layer 12. The crests 14 and troughs 16 of one layer 12 are aligned with and abut the troughs 16 and crests 14, respectively, of the layer 12 adjacently above or below it. This particular type of spring configuration is commonly referred to in the art as a "multi-wave" spring. The spring may be made from material such as, but not limited to metal, plastic, filled polymers, and unfilled polymers.

The spring 10 may be manufactured using injection molding, three-dimensional printing or other known processes. Alternatively, the layers 12 may be made with washers (for example, but not limited to, metal washers) or other material in which adjacent troughs 16 and crests 14 are bound together. The adjacent crests 14 and troughs 16 may be bound together by adhesive, resin, welding, riveting or other known methods. Alternatively the crests 14 and troughs 16 may be bound together as the layers 12 are formed. As the material is deposited during manufacture (i.e. by three-dimensional printing or by injection molding), the spring 10 is made a one piece with each layer 12 being integral with and bound to each adjacent layer 12, thereby binding adjacent crests 14 and troughs 16 together.

In one illustrative embodiment, each of the plurality of individual layers 12 has successive wave crests 14 and wave troughs 16. The first crests 14a and first troughs 16a of a first layer 12a are aligned with respective second troughs 16b and second crests 14b of an adjacent second layer 12b and with respective third troughs 16c and third crests 16c of an adjacent third layer 12c. The first crests 14a of the first layer 12a are bonded to the second troughs 16b of the adjacent second layer 16a and the first troughs 16a of the first layer 12a are bonded to the third crests 14c of the adjacent third layer 12c. As the crests 14 and troughs 16 of adjacent layers 12 are bonded together, friction between the crests and troughs is eliminated.

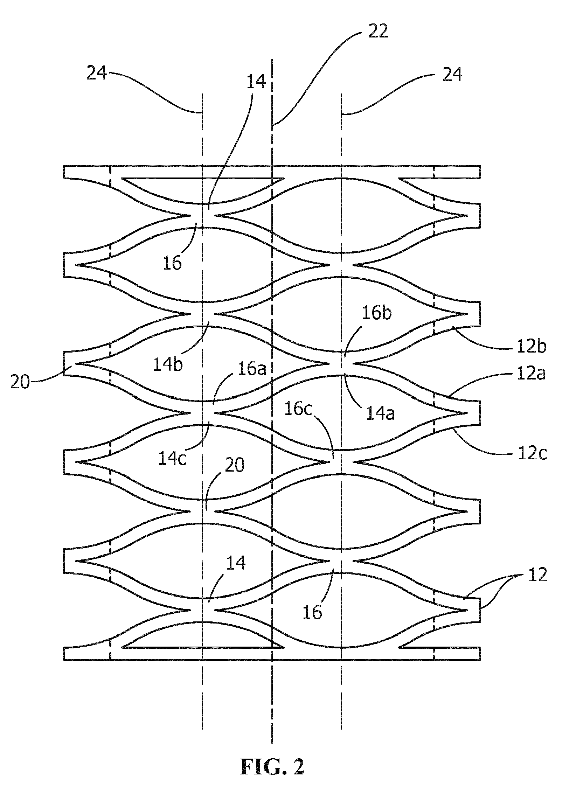

In another illustrative embodiment, the helical compression spring 10 is formed in one piece with multiple layers 12, as best shown in FIG 2. Each of the plurality of layers 12 has successive wave crests 14 and wave troughs 16. The first crests 14a and first troughs 16a of a first layer 12a are aligned with respective second troughs 16b and second crests 14b of an adjacent second layer 12b and with respective third troughs 16c and third crests 16c of an adjacent third layer 12c. The first crests 14a of the first layer 12a are integrally formed with the second troughs 16b of the adjacent second layer 12b and the first troughs 16a of the first layer 12a are integrally formed with the third crests 14c of the adjacent third layer 12c. As the crests 14 and troughs 16 of adjacent layers 12 are bonded together, friction between the crests and troughs is eliminated.

In the illustrative embodiment shown, the amplitude of the crests 14 and troughs 16 in one layer 12 is equal to the amplitude of the crests 14 and troughs 16 in adjacent layers and other layers. However, in other embodiments the spring 10 may have distinct regions formed along its longitudinal axis. The overall amplitude of the crests 14 and troughs 16 in any one of these layers or regions may not be equal to the overall amplitude of the crests 14 and troughs 16 in the remaining layers or regions. As used herein, the term "amplitude" is defined as the distance from a layer centerline to the peak of either the crest 14 and trough 16. This distance is generally equal to one-half of the free height of an individual layer 12.

As shown in FIG. 2, each crest 14 and trough 16 in an adjacent layer 12 of the spring 10 meet along an area of contact 20. The area of contact 20 is preferably generally perpendicular to a longitudinal spring axis 22 and extends in a radial direction outwardly from the spring axis 22. As a result of the area of contact 20 between the crests 14 and troughs 16 in adjacent layers 12 of the spring 10, the load is distributed over the entire radial width of each layer 12 of the spring 10 as opposed to the point contact typical in many metallic multi-wave compression springs as previously described. As the adjacent crests 14 and troughs 16 are bound together, the performance of the spring is enhanced by eliminating or reducing to a minimum the tendency for the spring to buckle or deflect sideways in response to a load, particularly an off-center or off-axis load. Further, hysteresis of the spring 10 is further reduced as the layers 12 are bound together or are integrally formed.

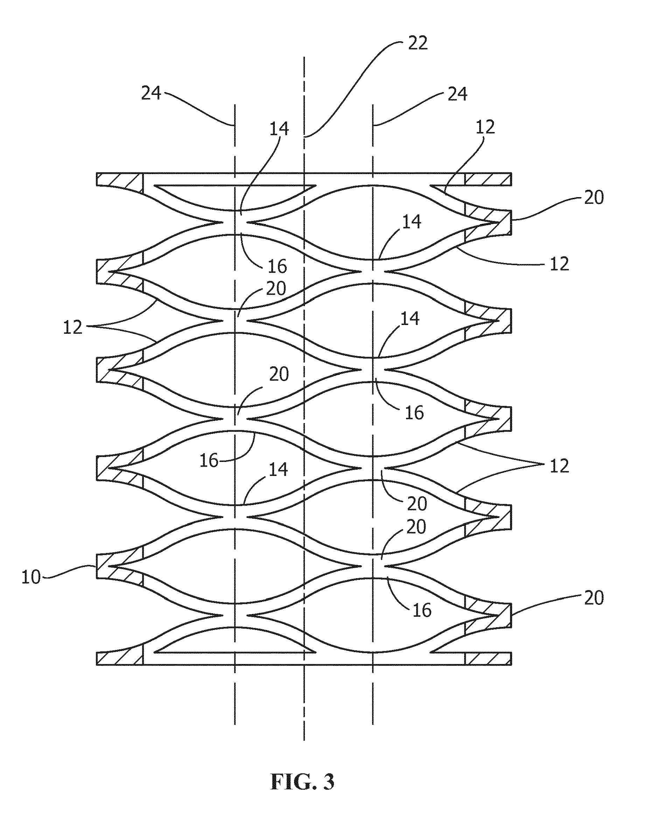

Another aspect of a preferred embodiment of the composite bonded helical compression spring 10 according to this invention is the longitudinal alignment on the spring 10 of corresponding contact areas 20 of the spring 10. As best shown in FIGS. 2 and 3, individual contact areas 20 between adjacent crests 14 and troughs 16 are aligned with corresponding contact areas 20 longitudinally along the height of the spring 10 to form a line 24 as shown in FIGS. 2 and 3. The line 24 is generally parallel to the longitudinal spring axis 22 and to other similar lines 24 on the spring 10. The advantage provided by aligning the contact areas 20 in such a way is to provide a more stable spring 10 under off-center or eccentric loading configurations and to prevent buckling when the springs are a large overall length. Forming the spring 10 in such a manner is possible according to the present invention due to the forming process associated herewith, unlike that of edge wound metallic multi-wave compression springs.

In one illustrative embodiment of the bonded helical compression spring 10, the spring 10 is made using three-dimensional printing. In the illustrative embodiment, the spring is made from polyetherimide (such as, but not limited to Ultem 9085) and is designed to provide 150 pounds of support and to support 450 pounds before bottoming out. The spring has an inside diameter of approximately 3.06 inches and an outside diameter of approximately 3.93 inches and is configured to fit over a 3 inch diameter rod or inside a 4 inch inside diameter tube. The free height is approximately 17.1 inches and the solid height is approximately 6.6 inches. The wave thickness is approximately 0.22 inches and the wave height is approximately 0.57 inches. The wave profile is circulate with an outside radius of approximately 1.49 inches. The wave crests or areas of contact 20 overlapped approximately 0.005 inches.

As previously stated, the spring 10 may be made using a three-dimensional printing process and apparatus, such as that described in co-pending U.S. Patent Application Serial Number 62/059,380, filed on October 3, 2014. Alternatively, the spring 10 may be made from a plurality of multi-wave rings stacked one upon another. Each multi-wave ring comprises one 360° turn of the spring 10 and includes an integral number of the generally sinusoidal successive wave crests 14 and troughs 16. For example, each multi-wave ring may include three complete waves. The adjacent multi-wave rings are arranged so that the crest 14 of the ring mates with the trough in the adjacent ring. One advantage of the spring 10 comprised of stacked multi-wave rings is that under load the mating crests 14 and troughs 16 do not slip relative to each other because the force is directed axially with no tangential component which may cause the upper level 12 to shift relative to the lower level 12 of the spring 10. The mating crests 14 and troughs 16 may be bound together with the binding resin or other materials as previously described.

It will be appreciated that spring design for fatigue applications involves more than simply selecting the physical dimensions of the spring material. The design entails choosing a cost effective material that satisfies the service life requirements under the expected load, stress and environmental conditions. Generally, the parameters which determine spring design in fatigue applications include available space, required loads and deflections, methods of stressing, rate of load application, operating environment and minimum fatigue life with required reliability. The fatigue life of a spring is related to material strength, stress and environment. Higher material strength is a very important factor in improving fatigue life. The composite multi-wave compression spring according to this invention has increased fatigue life and is capable of handling higher loads.

A spring according to the present invention can be produced virtually the same size as a comparable multi-wave metallic spring, and it is anticipated that it will have a longer useful life than such an equivalent metallic multi-wave spring. Furthermore, the cost of springs according to this invention is substantially less than those made from exotic lightweight metallic alloys and the weight savings afforded by the present invention is substantial in comparison to conventional spring materials.

The multi-wave composite compression spring according to this invention overcomes the problems of point contact between adjacent crests and troughs of metallic multi-wave compression springs by forming or bonding the adjacent crests and troughs together. This improves the fatigue life of the spring including the reduction of concentrated stresses. In addition, the buckling stability of the spring improves over springs fabricated with only point contact at the wave interfaces by providing for uniform load bearing support.

In addition, as the adjacent crests and troughs are bonded together, friction between the crests and troughs is eliminated, thereby eliminating the wear which can occur on metallic springs and enhances the linearity of the spring response. In contrast, as the load on a metal spring increases, the friction forces decrease the ability of such a spring to slide with respect to itself thereby affecting the metal spring constant.

Hysteresis is also reduced by the spring of the present invention. As is known in the art, wave springs normally exert more expansive force under loading conditions than upon unloading conditions. This effect is known as hysteresis. Because the spring of the present invention minimizes or eliminates friction between the crests and the troughs, the hysteresis effect acts so that the plot of force/deflection is approximately the same under both loading and unloading conditions.

Other factors which lead to the advantages of the multi-wave compression spring according to this invention include the thermal expansion of materials which is negligible compared to steel springs. In many applications, particularly in the automotive industry, multi-wave compression springs are used in high temperature environments and thermal expansion of the steel springs can detrimentally effect their performance. In addition, the method used to fabricate the spring does not induce sizable residual stresses during manufacturing compared to the fabrication process for metal multi-wave springs.

It will be appreciated that the present invention provides a lightweight bonded helical compression spring having comparable or improved strength relative to metallic compression springs but offering improved fatigue life and spring response characteristics.

It will also be appreciated that a bonded helical compression spring according to the present invention can be compressed to a solid height without damage. In addition, the distribution of stress in the spring is more balanced and uniform with any stress singularities.

While the invention has been described with reference to a preferred embodiment, it will be understood by those skilled in the art that various changes may be made and equivalents may be substituted for elements thereof without departing from the scope of the invention of the invention as defined in the accompanying claims. In particular, it will be clear to those skilled in the art that the present invention may be embodied in other specific forms, structures, arrangements, proportions, sizes, and with other elements, materials, and components, without departing from the spirit or essential characteristics thereof. One skilled in the art will appreciate that the invention may be used with many modifications of structure, arrangement, proportions, sizes, materials, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being defined by the appended claims, and not limited to the foregoing description or embodiments.

## Claims

1. A bonded helical compression spring (10) comprising:
a plurality of layers (12a, 12b, 12c) having successive wave crests (14a, 14b, 14c) and troughs (16a, 16b, 16c), first crests (14a) and first troughs (16a) of a first layer (12a) being aligned with respective second troughs (16b) and second crests (14b) of an adjacent second layer (12b) and with respective third troughs (16c) and third crests (14c) of an adjacent third layer (12c), the first crests (14a) of the first layer (12a) being bonded to the second troughs (16b) of the adjacent second layer (12b) and the first troughs (16a) of the first layer (12a) being bonded to the third crests (14c) of the adjacent third layer (12c);
wherein as the crests (14a, 14b, 14c) and troughs (16a, 16b, 16c) of adjacent layers (12a, 12b, 12c) are bonded together, friction between the crests (14a, 14b, 14c) and troughs (16a, 16b, 16c) is eliminated.

2. The bonded helical compression spring (10) as recited in claim 1, wherein the crests (14a, 14b, 14c) and troughs (16a, 16b, 16c) follow a substantially sinusoidal wave path.

3. The bonded helical compression spring (10) as recited in claim 1 or claim 2, wherein the number of crests (14a, 14b, 14c) and troughs (16a, 16b, 16c) is equal for each layer (12a, 12b, 12c).

4. The bonded helical compression spring (10) as recited in any preceding claim, wherein an amplitude of the crests (14a, 14b, 14c) and troughs (16a, 16b, 16c) in adjacent layers (12a, 12b, 12c) is equal.

5. The bonded helical compression spring (10) as recited in any preceding claim, wherein contact areas (20) between adjacent crests (14a, 14b, 14c) and troughs (16a, 16b, 16c) are perpendicular to a longitudinal spring axis (22) and extend in a radial direction outwardly from the spring axis (22), whereby a load is distributed over the entire radial width of each layer (12a, 12b, 12c).

6. The bonded helical compression spring (10) as recited in claim 4, wherein individual contact areas between adjacent crests (14a, 14b, 14c) and troughs (16a, 16b, 16c) are aligned with corresponding contact areas (20) longitudinally along the height of the spring (10) to form a line which is generally parallel to the longitudinal spring axis (22), wherein the spring (10) is more stable under off-center or eccentric loading configurations.

7. The bonded helical compression spring (10) as recited in any preceding claim, wherein each layer (12a, 12b, 12c) is made from a polymer material.

8. The bonded helical compression spring (10) as recited in any preceding claim, wherein the spring (10) is formed in one piece.

9. The bonded helical compression spring (10) as recited in any preceding claim, wherein the plurality of layers (12a, 12b, 12c) are three-dimensionally printed.

10. The bonded helical compression spring (10) as recited in any one of claims 1 to 6, wherein each layer (12a, 12b, 12c) is made from metal washers.
